# FASCICULE DE BREVET EUROPEEN

(11) **EP 4 045 298 B1**
(45) Date de publication et mention de la délivrance du brevet: **16.08.2023**
(21) Numéro de dépôt: 20799782.6
(22) Date de dépôt: 15.10.2020
(51) Int. Cl.: B29D 30/06, B29D 30/20, B60C 9/02

(54) **ASSEMBLAGE COMPRENANT UN TISSU À ÂME FUSIBLE ET UNE STRUCTURE PORTEUSE**
ANORDNUNG AUS EINEM GEWEBE MIT EINEM SCHMELZBAREN KERN UND EINER STÜTZSTRUKTUR
ASSEMBLY COMPRISING A FABRIC WITH A MELTABLE CORE AND A SUPPORTING STRUCTURE

(30) Priorité: 18.10.2019 FR 1911719
(43) Date de publication de la demande: 24.08.2022
(73) Titulaire: COMPAGNIE GENERALE DES ETABLISSEMENTS MICHELIN, 63000 Clermont-Ferrand (FR)
(72) Inventeur: BROUSSEAU, Magaly, 63040 CLERMONT-FERRAND Cedex 9 (FR); GUILLAUMAIN, Jérémy, 63040 CLERMONT-FERRAND Cedex 9 (FR); LIMOZIN, Bastien, 63040 CLERMONT-FERRAND Cedex 9 (FR); RIGO, Sébastien, 63040 CLERMONT-FERRAND Cedex 9 (FR)
(74) Mandataire: Louret, Sylvain
(86) Numéro de dépôt international: PCT/FR2020/051845
(87) Numéro de publication internationale: WO 2021/074538

(56) Documents cités:
- WO-A1-2018/130783
- WO-A1-2018/130785

## Description

### Domaine technique de l'invention

L'invention a pour objet un assemblage, un assemblage imprégné, un article de caoutchouc comprenant cet assemblage et un pneumatique comprenant cet assemblage.

L'invention concerne en particulier le domaine des pneumatiques destinés à équiper des véhicules. Le pneumatique est conçu préférentiellement pour des véhicules de tourisme, mais peut être utilisé sur tout autre type de véhicule tels que des véhicules à deux roues, des véhicules poids lourds, agricoles, de génie civil ou des avions ou, plus généralement, sur tout dispositif roulant.

### Art antérieur

Dans ce qui suit, et par convention, les directions circonférentielle XX', axiale YY' et radiale ZZ' désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur », respectivement « radialement extérieur», on entend «plus proche de l'axe de rotation du pneumatique », respectivement « plus éloigné de l'axe de rotation du pneumatique». Par «axialement intérieur », respectivement « axialement extérieur», on entend «plus proche du plan équatorial du pneumatique», respectivement « plus éloigné du plan équatorial du pneumatique», le plan équatorial XZ du pneumatique étant le plan passant par le milieu de la surface de roulement du pneumatique et perpendiculaire à l'axe de rotation du pneumatique.

De façon générale, un pneumatique comprend un sommet ayant deux extrémités axiales prolongées chacune, radialement vers l'intérieur, par un flanc puis par un bourrelet destiné à entrer en contact avec une jante, l'ensemble délimitant une cavité torique intérieure. Plus précisément le sommet comprend, radialement de l'extérieur vers l'intérieur, une bande de roulement, destinée à entrer en contact avec le sol par l'intermédiaire d'une surface de roulement, une armature de sommet et une portion d'armature de carcasse destinées à assurer le renforcement du pneumatique. L'armature de carcasse relie les deux flancs entre eux en s'étendant dans une portion radialement intérieure du sommet et est ancrée, dans chaque bourrelet, à un élément circonférentiel de renforcement, le plus souvent de type tringle.

Le pneumatique possède en tout point de sa surface de roulement, destinée à entrer en contact avec un sol, une double courbure: une courbure circonférentielle et une courbure méridienne. Par courbure circonférentielle, on entend une courbure dans un plan circonférentiel, défini par la direction circonférentielle et la direction radiale. Par courbure méridienne, on entend une courbure dans un plan méridien ou radial, défini par la direction axiale et la direction radiale.

Il est connu que la mise à plat du pneumatique sur un sol horizontal, dans un plan circonférentiel et dans un plan méridien, est conditionnée par les valeurs des rayons de courbure respectivement circonférentiel et méridien, au niveau des points de la surface de roulement positionnés aux limites de l'aire de contact du pneumatique avec le sol. Cette mise à plat est d'autant plus facilitée que ces rayons de courbure sont grands, c'est-à-dire que les courbures sont petites, la courbure en un point, au sens mathématique, étant l'inverse du rayon de courbure. Il est également connu que la mise à plat du pneumatique impacte les performances du pneumatique, en particulier la résistance au roulement, l'adhérence, l'usure et le bruit.

Par conséquent, l'homme du métier, spécialiste du pneumatique, cherchant à obtenir le bon compromis entre les performances attendues du pneumatique telles que, de façon non exhaustive, l'usure, l'adhérence, l'endurance, la résistance au roulement et le bruit, a développé des solutions alternatives au pneumatique classique pour optimiser sa mise à plat.

Un pneumatique classique de l'état de la technique a généralement une grande courbure méridienne, c'est-à-dire un petit rayon de courbure méridien, au niveau des extrémités axiales de la bande de roulement, appelées épaules, lorsque le pneumatique, monté sur sa jante de montage et gonflé à sa pression d'utilisation recommandée, est soumis à sa charge nominale. La jante de montage, la pression d'utilisation et la charge nominale sont définies par des normes, telles que, par exemple, les normes de la European Tyre and Rim Technical Organisation (ETRTO).

Un pneumatique classique porte la charge appliquée, essentiellement par les extrémités axiales de la bande de roulement, ou épaules, et par les flancs reliant la bande de roulement à des bourrelets assurant la liaison mécanique du pneumatique avec sa jante de montage. Il est connu qu'une mise à plat méridienne d'un pneumatique classique, avec une petite courbure méridienne au niveau des épaules, est généralement difficile à obtenir.

Le document WO2018/130782 décrit un pneumatique dont la mise à plat est facilitée comprenant un assemblage comprenant une première et une deuxième structure s'étendant selon une première direction générale, reliées par une structure porteuse, la première structure étant agencée de telle sorte que, pour une longueur au repos L de la première structure selon la première direction générale, l'allongement à force maximale Art de la première structure est supérieure à 2×π×H/L, avec H≥H0×K, H0 représentant la distance droite moyenne entre une face interne de la première structure et une face interne de la deuxième structure lorsque la structure porteuse est au repos, et K=0,50. Une première structure en éléments filaires d'élasthanne est présentée. Ainsi, cet assemblage peut s'étendre sans se rompre lors de la conformation qui lui est imposée lors de la fabrication du pneumatique. Toutefois, il peut exister un retour élastique de la première structure à l'issue de la conformation qui nécessite d'être particulièrement vigilant entre la conformation et la cuisson du pneumatique afin de s'assurer de la parfaite uniformité de l'ébauche (ou pneumatique cru).

Le document WO2018/130783 décrit un pneumatique présentant une mise à plat améliorée de la bande de roulement comprenant un assemblage comprenant une première et une deuxième structure s'étendant selon une première direction générale, reliées par une structure porteuse. La première structure comprend des premier et deuxième organes filaires tels que, pour tout allongement de la première structure selon la première direction générale inférieur ou égal à 2×π×H/L, le premier organe filaire présente un allongement non nul et est non rompu, et il existe un allongement de la première structure selon la première direction générale inférieur ou égal à 2×π×H/L à partir duquel le deuxième organe filaire est rompu, L représentant la longueur au repos de la première structure selon la première direction générale, et H≥H0×K, H0 représentant la distance droite moyenne entre une face interne de la première structure et une face interne de la deuxième structure lorsque la structure porteuse est au repos, et K=0,50. Ainsi, lors de la conformation, les deuxièmes organes filaires rompent, permettant à la première structure de s'étendre. Toutefois, il convient d'être attentif lors de l'opération de conformation afin que les ruptures, qui peuvent avoir lieu par à-coups, n'engendrent pas d'hétérogénéités dans l'allongement de la première structure, qui pourraient nuire à la parfaite uniformité de l'ébauche.

La présente invention a pour objectif de proposer un assemblage résolvant les problèmes soulevés par l'art antérieur, qui soit en particulier capable de se déformer sans à-coups et sans retour élastique, ainsi qu'un pneumatique permettant une mise à plat améliorée de la bande de roulement lorsque le pneumatique est soumis à une charge.

### Description détaillée de l'invention

L'invention concerne au moins l'une des réalisations suivantes : voir les revendications 1 à 15.

### Définitions

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Par « sensiblement parallèle » ou « s'étendant sensiblement selon », on entend que l'angle formé par les deux directions en question est inférieur à 10°, de préférence inférieur à 5°, de manière préférée inférieur à 2° et de manière très préférée inférieur ou égal à l'erreur de mesure de l'angle par une méthode adaptée.

Par « direction générale » d'un objet, on entend la direction générale selon laquelle s'étend l'objet selon sa plus grande longueur. Pour un tissu, la direction générale du tissu est parallèle aux bords longitudinaux du tissu. Ainsi, par exemple, un tissu enroulé sur une bobine de révolution autour d'un axe présente une direction générale sensiblement parallèle à la direction de déroulage du tissu (c'est à dire la direction circonférentielle) qui est perpendiculaire aux directions axiale et radiale de la bobine.

Tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

Par l'expression "élément à base de", il faut entendre un élément comprenant le mélange et/ou le produit de réaction in situ des différents constituants ou matériaux utilisés, certains de ces constituants ou matériaux pouvant réagir et/ou étant destinés à réagir entre eux, au moins partiellement, lors des différentes phases de fabrication de l'élément.

### Assemblage

Le principe de l'assemblage selon l'invention est d'avoir une structure porteuse comprenant des éléments porteurs reliant le premier tissu et le deuxième tissu, et capable, une fois l'assemblage agencé dans le pneumatique, de porter au moins en partie la charge appliquée au pneumatique par la mise en tension d'une partie des éléments porteurs positionnés en dehors de l'aire de contact, les éléments porteurs positionnés dans l'aire de contact étant soumis à un flambage car soumis à un effort de compression et ne participant donc pas au port de la charge appliquée.

La première direction de chaine étant sensiblement parallèle à la première direction générale et le premier tissu étant suffisamment déformable, le procédé de fabrication du pneumatique est largement facilité. En effet, le premier tissu peut être déformé grâce à l'allongement du premier élément filaire sans rompre de façon à s'allonger suffisamment pour suivre la conformation qui lui est imposée lors de la fabrication du pneumatique. L'utilisation d'un deuxième organe filaire à base d'un matériau fusible à une température comprise entre 20 et 220°C. Par fusible, on entend un matériau qui peut être fragilisé, voire décomposé, au moins partiellement sous l'action d'un moyen externe tel que par exemple la température, un rayonnement, ou la mise en contact avec un solvant. De même, par fusion, on entend la fragilisation, voire la décomposition au moins partielle du matériau. Par décomposition, on entend la rupture de la continuité du matériau en au moins un point. Par fragilisation, on entend que le module de Young du matériau est divisé par un facteur 5, préférentiellement par un facteur 10.

L'utilisation d'un deuxième organe filaire à base d'un matériau fusible à une température comprise entre 20 et 220°C, en particulier un matériau hydrosoluble, thermofusible, ou photodégradable, permet d'avoir un premier tissu présentant une rigidité relativement importante et une capacité à s'allonger relativement faible lors du procédé de fabrication du premier tissu rendant ce dernier plus facile à mettre en oeuvre par rapport à un premier tissu dans lequel les premiers éléments filaires de chaine seraient plus élastiques et auraient une capacité à s'allonger relativement élevée tout en ayant, après traitement adéquat, un tissu présentant une capacité à s'allonger sous très faible contrainte.

Par hydrosoluble, on entend un matériau qui se dissout lorsqu'il est mis en présence d'eau. Par thermofusible, on entend un matériau qui fond sous l'action de la température. Par photodégradable, on entend un matériau qui se fragilise et se décompose sous l'action du rayonnement, en particulier sous l'action d'un rayonnement ultra-violet (UV).

L'application sur l'assemblage selon l'invention d'un moyen adapté à la nature du matériau fusible, et choisi par exemple parmi la température, un rayonnement, l'eau et l'association d'au moins deux de ces moyens permet de fragiliser au moins partiellement, voire de créer des discontinuités dans, le deuxième organe filaire fusible et donc de permettre un allongement du premier tissu lors de l'opération de conformation du pneumatique sous très faible contrainte, de manière homogène et sans à-coups qui seraient dus aux ruptures d'âme de premiers éléments filaires de type guipé tels que décrits dans l'état de la technique. Enfin, malgré la fusion au moins partielle du deuxième organe filaire, la structure tissée du premier tissu est conservée en raison de la non rupture du premier organe filaire qui permet le maintien d'une structure de chaine continue dans le premier tissu.

### Premier tissu de l'assemblage selon l'invention

Le premier tissu de l'assemblage selon l'invention présente un bord longitudinal s'étendant suivant une première direction générale (G1), et comprend des premiers éléments filaires, dits de chaîne, sensiblement parallèles entre eux et s'étendant selon une première direction (C1) dite de chaine, sensiblement parallèle à la première direction générale (G1), chaque premier élément filaire de chaîne comprenant des premier et deuxième organes filaires.

Dans un mode de réalisation préféré, le premier tissu est agencé de sorte que, pour toute contrainte non nulle, exprimée en N, inférieure ou égale à (P0 × (L/2π + H) × 1) / 2 exercée sur le premier tissu selon la première direction générale, le premier tissu présente un allongement non nul selon la première direction générale.

Dans cette expression ainsi que dans la suite de l'exposé, 1 est la largeur du premier tissu exprimée en m et P0=100000 Pa.

Dans un mode de réalisation préféré, le premier tissu est agencé de sorte que, pour tout allongement du premier tissu selon la première direction générale inférieur ou égal à (2π × H) / L, le premier tissu développe une force, exprimée en N, selon la première direction générale inférieure ou égale à (P0 × (L/2π + H) × l) / 2. La force développée est mesurée en appliquant la norme NF EN ISO 13934-1 de juillet 2013.

Ainsi, le premier tissu est déformable sous une contrainte relativement faible ce qui permet, lors du procédé de fabrication du pneumatique, d'utiliser une contrainte de conformation adaptée ne risquant pas de détériorer l'ébauche.

Dans un mode de réalisation, la force maximale du le premier tissu selon la première direction générale, est supérieure à (P0 × (L/2π + H) × 1) / 2. La force maximale est la force nécessaire pour obtenir l'allongement à la force maximale tel que défini dans la norme NF EN ISO 13934-1 de juillet 2013. Ainsi, à contrainte imposée, on évite de rompre le premier tissu lors de la conformation.

Avantageusement, P0=80000 Pa, de préférence P0=60000 Pa, plus préférentiellement P0=40000 Pa. Plus P0 est petit, plus il est possible d'utiliser des contraintes petites lors du procédé de fabrication du pneumatique et moins on risque de détériorer l'ébauche lors de ce procédé.

De manière préférée, le premier tissu comprend des premiers éléments filaires, dits de trame, sensiblement parallèles entre eux et s'entrecroisant avec les premiers éléments filaires de chaine. Dans ce mode de réalisation préférentiel, le premier tissu comprend, de manière connue de l'homme du métier, une armure caractérisant l'entrecroisement des premiers éléments filaires de chaine et de trame. Selon les modes de réalisation, cette armure est de type toile, serge ou satin. De façon préférée, afin de conférer de bonnes propriétés mécaniques dans une utilisation en pneumatique, l'armure est de type toile.

De manière préférée, les premières directions de chaine et de trame forment l'une avec l'autre un angle allant de 70° à 90°, de préférence sensiblement égal à 90°.

Les caractéristiques mécaniques de tels tissus telles que leur rigidité en extension et leur force à force maximale en traction, selon le sens des éléments filaires de chaine ou de trame, dépendent des caractéristiques des éléments filaires, telles que, pour des éléments filaires textiles, le titre, exprimé en tex ou g/1000 m, la ténacité, exprimée en cN/tex, et la contraction standard, exprimée en %, ces éléments filaires étant répartis selon une densité donnée, exprimée en nombre de fils/dm. Toutes ces caractéristiques sont fonction du matériau constitutif des éléments filaires et de leur procédé de fabrication.

Très préférentiellement, les premiers éléments filaires de chaine s'étendent continûment sur toute la longueur du premier tissu.

### - Premier organe filaire

De manière préférée, le premier organe filaire comprend au moins un brin multifilamentaire comprenant plusieurs monofilaments chacun constitué d'un matériau choisi parmi un polyester, un polyamide, une polycétone, un polyuréthane, une fibre naturelle, de préférence choisi parmi un polyester, un polyamide, une polycétone, un polyuréthane et un assemblage de ces matériaux, plus préférentiellement choisi parmi les polyesters et les assemblages de polyesters. Les polyesters sont avantageux en raison de leur ténacité élevée, leur coût faible, leur tenue thermique compatible avec une utilisation en pneumatique et une contraction thermique standard pouvant être choisie.

De préférence, la longueur de chaque premier organe filaire au repos va de L à 1,30×L, préférentiellement de L à 1,25×L, très préférentiellement de L à 1,20×L. La longueur au repos du premier organe filaire est mesurée selon la direction principale du premier organe filaire. Cette longueur correspond à la longueur totale du premier organe filaire quand il n'est pas incorporé dans un premier élément filaire, et lorsqu'il est au repos, c'est-à-dire qu'il n'est ni en extension, ni en compression selon la direction générale du premier organe filaire, et présente donc un allongement nul.

### - Deuxième organe filaire

Le deuxième organe filaire de chaque premier élément filaire du premier tissu de l'assemblage selon l'invention est à base d'un matériau fusible à une température comprise entre 20 et 220°C, c'est-à-dire d'un matériau capable de se dégrader à une température comprise entre 20 et 220°C, ce matériau fusible étant préférentiellement un matériau au moins hydrosoluble, thermofusible, ou photodégradable. Le deuxième organe filaire est très préférentiellement à base d'un polymère hydrosoluble, le polymère hydrosoluble étant préférentiellement choisi parmi l'alcool polyvinylique, l'acide polylactique, le polyéthylène glycol, le polyacrylamide et le polyvinylpyrrolidone, plus préférentiellement choisi parmi l'alcool polyvinylique et l'acide polylactique.

Un deuxième organe filaire à base d'un matériau polymérique hydrosoluble lui permet de se dissoudre au moins partiellement, voire complètement, dès qu'il est mis en présence d'eau ou d'une solution ou suspension aqueuse, avantageusement à une température comprise entre 15 et 220°C, préférentiellement comprise entre 20 et 200°C, et confère par conséquent au premier tissu de l'assemblage selon l'invention une capacité à s'allonger de manière homogène et sans à-coup lors de l'étape de conformation imposée au cours de la fabrication du pneumatique, sans retour élastique, ce qui réduit considérablement le risque d'obtenir une ébauche irrégulière avant cuisson. La température a pour effet d'accélérer la dissolution du matériau polymérique hydrosoluble et peut donc être ajustée en fonction des besoins de mise en oeuvre de l'assemblage selon l'invention.

Ainsi, dans le cas particulier d'un deuxième organe filaire à base d'un polymère hydrosoluble, en particulier un polymère hydrosoluble choisi parmi l'alcool polyvinylique, l'acide polylactique, le polyéthylène glycol, le polyacrylamide et le polyvinylpyrrolidone, préférentiellement choisi parmi l'alcool polyvinylique et l'acide polylactique, la mise en contact de l'assemblage selon l'invention avec une composition adhésive comprenant de l'eau préalablement à son incorporation dans un pneumatique permet de dissoudre au moins partiellement, voire totalement, le deuxième organe filaire à base d'un polymère hydrosoluble et donc de permettre un allongement du premier tissu lors de l'opération de conformation du pneumatique sous très faible contrainte, de manière homogène et sans à-coups qui seraient dus aux ruptures d'âme de premiers éléments filaires de type guipé tels que décrits dans l'état de la technique. Enfin, malgré la dissolution au moins partielle du deuxième organe filaire, la structure tissée du premier tissu est conservée en raison de la non rupture du premier organe filaire qui permet le maintien d'une structure de chaine continue dans le premier tissu.

De manière préférée, le deuxième organe filaire est sensiblement rectiligne et le premier organe filaire est enroulé sensiblement en hélice autour du deuxième organe filaire. Ainsi, lorsque le premier tissu est déformé selon sa direction principale, le premier organe filaire se déploie sans que le deuxième organe filaire, préalablement au moins partiellement dissous par mise au contact du premier tissu avec de l'eau ne vienne empêcher cette déformation.

De manière préférée, le deuxième organe filaire comprend au moins un brin multifilamentaire comprenant plusieurs monofilaments. Dans un arrangement préféré, le deuxième organe filaire est constitué de un monofilament. Dans un autre arrangement préféré, le deuxième organe filaire est constitué de deux monofilaments.

Un deuxième organe filaire particulièrement adapté aux besoins de l'invention est par exemple un fil en acide polylactique (PLA), tel que les fils PLA commercialisés par la société Rütex et présentant un titre de 21 tex, ou encore un fil en alcool polyvinylique (PVA) tel que les fils PVA commercialisés par la société Kuraray et présentant un titre de 15 tex.

De manière préférée, le deuxième organe filaire étant sensiblement rectiligne, le premier organe filaire est enroulé en hélice autour du deuxième organe filaire et formant sensiblement périodiquement des boucles. Le premier élément filaire est très préférentiellement de type bouclé.

Les éléments filaires de type bouclé (« loop yarn » ou « boucle yarn ») sont bien connus de l'Homme du métier. Ils diffèrent des éléments filaires de type guipé (« winding yarn » ou « gimp yarn » selon la terminologie anglaise) en ce que le premier organe filaire, couramment appelé « fil de couverture » ou « fil d'effet », est suralimenté lors de la fabrication de l'élément filaire. Les éléments filaires de type bouclé peuvent être produits par les procédés classiques tels que des métiers à anneaux, qui permettent de mettre en oeuvre des premiers organes filaires de plus faibles ténacité qu'avec les procédés de type machine à âme cassante avec lesquels sont produits les éléments filaires de type guipé, ce qui permet d'obtenir des premiers éléments filaires rompant sous plus faible contrainte que des éléments filaires de type guipé, tout en étant suffisamment résistants pour permettre la fabrication d'un assemblage tel que celui de la présente invention.

Ainsi, en utilisant des premiers éléments filaires de chaîne de type bouclé, on peut mettre en oeuvre dans l'assemblage selon l'invention des deuxièmes organes filaires se déformant plastiquement sous faible contrainte, ce qui permet une déformation plus facile, uniforme et homogène du premier tissu de l'assemblage selon l'invention lors de l'opération de conformation.

### Deuxième tissu de l'assemblage

Dans un mode de réalisation, le deuxième tissu comprend :
- des deuxièmes éléments filaires, dits de chaine, sensiblement parallèles entre eux et s'étendant selon une deuxième direction, dite de chaine, et
- des deuxièmes éléments filaires, dits de trame, sensiblement parallèles entre eux et s'étendant selon une deuxième direction, dite de trame et s'entrecroisant avec les deuxièmes éléments filaires de chaine.

Dans ce mode de réalisation préférentiel, le deuxième tissu comprend, de manière connue de l'homme du métier, une armure caractérisant l'entrecroisement des deuxièmes éléments filaires de chaine et de trame. Selon les modes de réalisation, cette armure est de type toile, serge ou satin. De façon préférée, afin de conférer de bonnes propriétés mécaniques pour une utilisation en pneumatique, l'armure est de type toile.

De manière préférée, les deuxièmes directions de chaine et de trame forment l'une avec l'autre un angle allant de 70° à 90°, de préférence sensiblement égal à 90°.

Préférentiellement, le deuxième tissu s'étend selon une deuxième direction générale, la deuxième direction de chaine des deuxièmes éléments filaires étant sensiblement parallèle à la deuxième direction générale. Un tel deuxième tissu permet un procédé de fabrication de l'assemblage et du pneumatique largement facilité.

Dans un autre mode de réalisation, le deuxième tissu est un tricot comprenant des boucles entrelacées.

Dans un mode de réalisation, chaque élément filaire porteur comprend une deuxième portion filaire d'ancrage de chaque élément filaire porteur dans le deuxième tissu prolongeant la portion filaire porteuse dans le deuxième tissu.

Préférentiellement, chaque deuxième portion filaire d'ancrage est entrelacée avec le deuxième tissu. Un tel assemblage présente l'avantage de pouvoir être fabriqué en une seule étape. Toutefois, il est également possible d'envisager de fabriquer l'assemblage en deux étapes, une première étape de fabrication du deuxième tissu et une deuxième étape d'entrelacement du ou des éléments filaires porteurs avec le deuxième tissu. Dans les deux cas, l'entrelacement de chaque élément porteur avec le deuxième tissu permet d'assurer l'ancrage mécanique de chaque élément porteur dans le deuxième tissu et ainsi de conférer les propriétés mécaniques souhaitées à la structure porteuse.

Dans un mode de réalisation, afin d'assurer l'ancrage mécanique de la portion filaire d'ancrage, chaque deuxième portion filaire d'ancrage est enroulée au moins en partie autour d'au moins un deuxième élément filaire du deuxième tissu.

De manière préférée, le deuxième tissu comprend :
- des deuxièmes éléments filaires, dits de chaine, sensiblement parallèles entre eux et s'étendant selon une deuxième direction, dite de chaine, et
- des deuxièmes éléments filaires, dits de trame, sensiblement parallèles entre eux et s'étendant selon une deuxième direction, dite de trame et s'entrecroisant avec les deuxièmes éléments filaires de chaine,
chaque deuxième portion filaire d'ancrage étant enroulée au moins en partie autour d'au moins un deuxième élément filaire de trame du deuxième tissu, de préférence autour d'au moins deux deuxièmes éléments filaires de trame adjacents selon la deuxième direction générale.

Dans un mode de réalisation, chaque deuxième portion filaire d'ancrage s'étend selon une direction sensiblement parallèle à la deuxième direction générale.

De préférence, chaque deuxième portion filaire d'ancrage passe alternativement d'une face du deuxième tissu à l'autre face du deuxième tissu entre deux deuxièmes éléments filaires de trame adjacents autour desquels la deuxième portion filaire d'ancrage s'enroule.

Très préférentiellement, les deuxièmes éléments filaires de chaine s'étendent continûment sur toute la longueur du deuxième tissu.

### Structure porteuse

L'assemblage selon l'invention comprend une structure porteuse comprenant des éléments filaires porteurs reliant le premier tissu au deuxième tissu, chaque élément filaire porteur comprenant au moins une portion filaire porteuse s'étendant entre le premier et le deuxième tissu.

Par élément filaire porteur, on entend tout élément longiligne de grande longueur relativement à sa section transversale, quelle que soit la forme de cette dernière, par exemple circulaire, oblongue, rectangulaire ou carrée, ou même plate, cet élément filaire pouvant être par exemple torsadé ou ondulé. Lorsque sa section transversale est de forme circulaire, le diamètre de cette section est de préférence inférieur à 5 mm, plus préférentiellement compris dans un domaine allant de 100 µm à 1,2 mm.

Chaque élément filaire porteur, notamment chaque portion filaire porteuse qui relie les faces internes des premier et deuxième tissus l'un à l'autre, peut être caractérisée géométriquement par sa longueur au repos LP et par sa section moyenne SP, qui est la moyenne des sections obtenues par la coupe de la portion filaire porteuse par toutes les surfaces parallèles aux premier et deuxième tissu et comprises entre les premier et deuxième tissus. Dans le cas le plus fréquent d'une section constante de l'élément porteur et de la portion filaire porteuse, la section moyenne SP est égale à cette section constante.

Chaque élément filaire porteur, notamment chaque portion porteuse, présente typiquement une plus petite dimension caractéristique E de sa section moyenne SP, préférentiellement au plus égale à 0.02 fois l'espacement maximal entre les deux faces internes des premier et deuxième tissus (qui correspond à la hauteur radiale moyenne H de l'espace annulaire intérieur une fois l'assemblage agencé au sein du pneumatique en l'absence de charge appliquée au pneumatique et en l'absence de pression dans le pneumatique) et un rapport de forme R de sa section moyenne SP préférentiellement au plus égal à 3. Une plus petite dimension caractéristique E de la section moyenne SP de l'élément porteur au plus égale à 0.02 fois la hauteur radiale moyenne H de l'espace annulaire intérieur exclut tout élément porteur massif, ayant un volume important. En d'autres termes, lorsqu'il est filaire, chaque élément porteur a un élancement élevé, selon la direction radiale, lui permettant de flamber au passage dans l'aire de contact. En dehors de l'aire de contact, chaque élément porteur retrouve sa géométrie initiale, car son flambage est réversible. Un tel élément porteur a une bonne tenue à la fatigue.

Un rapport de forme R de sa section moyenne SP au plus égal à 3 signifie que la plus grande dimension caractéristique V de sa section moyenne SP est au plus égale à 3 fois la plus petite dimension caractéristique E de sa section moyenne SP. À titre d'exemples, une section moyenne SP circulaire, ayant un diamètre égal à d, a un rapport de forme R=1, une section moyenne SP rectangulaire, ayant une longueur V et une largeur V', a un rapport de forme R=V/V', et une section moyenne SP elliptique, ayant un grand axe B et un petit axe B', a un rapport de forme R=B/B'.

Un élément porteur filaire a un comportement mécanique de type filaire, c'est-à-dire qu'il ne peut être soumis qu'à des efforts d'extension ou de compression selon sa ligne moyenne.

Il est à noter que tous les éléments filaires porteurs d'une structure porteuse n'ont pas nécessairement des longueurs au repos LP identiques.

Dans un mode de réalisation préféré, la structure porteuse comprend une pluralité d'éléments filaires porteurs identiques, c'est-à-dire dont les caractéristiques géométriques et les matériaux constitutifs sont identiques.

Les éléments filaires porteurs sont agencés de sorte qu'ils sont deux à deux non liés mécaniquement dans un espace délimité par les premier et deuxième tissus. Ainsi, les éléments porteurs ont des comportements mécaniques indépendants. Par exemple, les éléments porteurs ne sont pas liés entre eux de façon à former un réseau ou un treillis.

De façon préférée, K'×H0 ≤ H < H0 avec K'=0,5 de sorte que, en l'absence de charge appliquée au pneumatique et en l'absence de pression dans le pneumatique, chaque portion filaire porteuse est dans un état replié. De manière préférentielle, K'=0,75, préférentiellement K'=0,80.

Plus K' se rapproche de 1, plus les portions filaires porteuses sont, en l'absence de charge appliquée au pneumatique et en l'absence de pression dans le pneumatique, proches de leur état au repos. Très préférentiellement, K=0,90 ce qui permet un port optimisé de la charge.

Dans un mode de réalisation préféré, chaque élément filaire porteur est textile. Par textile, on entend que chaque élément filaire porteur est non métallique, par exemple réalisé dans un matériau choisi parmi un polyester, un polyamide, une polycétone, un alcool polyvinylique, une cellulose, une fibre minérale, une fibre naturelle, un matériau élastomérique ou un mélange de ces matériaux. Parmi les polyesters on citera par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Parmi les polyamides, on citera les polyamides aliphatiques tels que les polyamides 4-6, 6, 6-6 (nylon), 11 ou 12 et les polyamides aromatiques tels que l'aramide.

Par exemple, chaque élément filaire porteur est un assemblage textile comprenant une ou plusieurs fibres mono-filamentaire ou multi-filamentaires textiles, retordues ensemble ou non. Ainsi, dans un mode de réalisation, on pourra avoir un assemblage dans lequel les fibres sont sensiblement parallèles les unes aux autres. Dans un autre mode de réalisation, on pourra avoir également un assemblage dans lequel les fibres sont enroulées en hélice. Dans encore un autre mode de réalisation, chaque élément filaire porteur est constitué d'un monofilament. Chaque fibre mono-filamentaire ou multi-filamentaire présente un diamètre compris entre 5 et 20 µm, par exemple 10 µm.

Dans un autre mode de réalisation, chaque élément filaire porteur est métallique, par exemple un assemblage de monofilaments métalliques, chaque monofilament métallique présentant un diamètre typiquement inférieur à 50 µm, par exemple 10 µm. Dans un mode de réalisation, chaque élément filaire porteur est constitué d'un assemblage de plusieurs monofilaments métalliques. Dans un autre mode de réalisation, chaque élément filaire porteur est constitué d'un monofilament métallique.

Dans un mode de réalisation, chaque élément filaire porteur s'étend alternativement du premier tissu vers le deuxième tissu et du deuxième tissu vers le premier tissu lorsqu'on se déplace le long de l'élément filaire porteur.

Dans un mode de réalisation, chaque élément filaire porteur comprend une première portion filaire d'ancrage de chaque élément filaire porteur dans le premier tissu prolongeant la portion filaire porteuse dans le premier tissu.

Préférentiellement, chaque première portion filaire d'ancrage est entrelacée avec le premier tissu. Un tel assemblage présente l'avantage de pouvoir être fabriqué en une seule étape. Toutefois, il est également possible d'envisager de fabriquer l'assemblage en deux étapes, une première étape de fabrication du premier tissu et une deuxième étape d'entrelacement du ou des éléments filaires porteurs avec le premier tissu. Dans les deux cas, l'entrelacement de chaque élément porteur avec le premier tissu permet d'assurer l'ancrage mécanique de chaque élément filaire porteur dans le premier tissu et ainsi de conférer les propriétés mécaniques souhaitées à la structure porteuse.

Dans un mode de réalisation, afin d'assurer l'ancrage mécanique de la portion filaire d'ancrage, chaque première portion filaire d'ancrage est enroulée au moins en partie autour d'au moins un premier élément filaire du premier tissu.

De manière préférée, le premier tissu comprend :
- des premiers éléments filaires, dits de chaine, sensiblement parallèles entre eux et s'étendant selon une première direction, dite de chaine, sensiblement parallèle à la première direction générale, et
- des premiers éléments filaires, dits de trame, sensiblement parallèles entre eux et s'étendant selon une première direction, dite de trame, et s'entrecroisant avec les premiers éléments filaires de chaine,
chaque première portion filaire d'ancrage étant enroulée au moins en partie autour d'au moins un premier élément filaire de trame du premier tissu, de préférence autour d'au moins deux premiers éléments filaire de trame adjacents selon la première direction générale.

Dans un mode de réalisation, chaque première portion filaire d'ancrage s'étend selon une direction sensiblement parallèle à la première direction générale.

De préférence, chaque première portion filaire d'ancrage passe alternativement d'une face du premier tissu à l'autre face du premier tissu entre deux premiers éléments filaires de trame adjacents autour desquels la première portion filaire d'ancrage s'enroule.

### Zones du tissu

Dans un mode de réalisation préféré permettant d'assurer efficacement la conformation du premier tissu de l'assemblage selon l'invention, le premier tissu comprend :
- un premier groupe de zones comprenant au moins une zone droite transversale (Z1), chaque zone droite transversale (Z1) du premier groupe de zones étant agencée de façon à permettre un allongement d'au moins une zone droite transversale (Z1) du premier groupe de zones selon la première direction générale (G1), de préférence un allongement de chaque zone droite transversale (Z1) du premier groupe de zones selon la première direction générale (G1),
- un deuxième groupe de zones comprenant au moins une zone droite transversale (Z2), chaque zone droite transversale (Z2) du deuxième groupe de zones étant agencée de façon à empêcher une rupture de ladite zone droite transversale (Z2).

Par définition, une zone droite transversale du tissu est délimitée longitudinalement par deux droites imaginaires sensiblement perpendiculaires à la première direction générale du tissu. Une zone droite transversale s'étend sur toute la largeur du tissu, c'est-à-dire que la zone droite transversale est délimitée transversalement par les bords longitudinaux du tissu.

Par rupture partielle au sens de la présente invention, on entend une rupture du deuxième organe filaire de chaque élément filaire de chaine de la zone sans rupture du premier organe filaire. Cette rupture diffère d'une rupture totale, c'est-à-dire une rupture de tous les organes filaires constituants chaque élément filaire de chaine de la zone. Par rupture du deuxième organe filaire, on entend la création de discontinuités dans le deuxième organe filaire, la rupture du deuxième organe filaire étant grandement facilitée par la nature fusible dudit deuxième organe. Une rupture partielle d'une zone ne doit pas être confondue avec une rupture partielle de certains éléments filaires de la zone tandis que d'autres éléments filaires de la zone seraient non rompus, ce qui ne permettrait pas de conformer correctement le premier tissu.

De préférence, chaque zone droite transversale du premier groupe de zones est agencée de façon à permettre un allongement de chaque zone droite transversale du premier groupe de zones selon la première direction générale pour toute contrainte non nulle inférieure ou égale à (P0×(L/2π+H)×1)/2 exercée sur le premier tissu selon la première direction général, et pour tout allongement du premier tissu selon la première direction générale inférieur ou égal à 2×π×H / L.

De préférence, chaque zone droite transversale du deuxième groupe de zones est agencée de façon à empêcher une rupture de chaque zone droite transversale du deuxième groupe de zones pour toute contrainte non nulle inférieure ou égale à (P0x(L/2π+H)x1)/2 exercée sur le premier tissu selon la première direction générale, et pour tout allongement du premier tissu selon la première direction générale inférieur ou égal à 2×π×H / L.

Dans un mode de réalisation permettant d'obtenir des zones droites transversales du deuxième groupe de zones indéformables, chaque zone droite transversale du deuxième groupe de zones est agencée de façon à empêcher un allongement de chaque zone droite transversale du deuxième groupe de zones selon la première direction générale, en particulier et de préférence pour toute contrainte non nulle inférieure ou égale à (P0×(L/2π+H)×l)/2 exercée sur le premier tissu selon la première direction générale, et pour tout allongement du premier tissu selon la première direction générale inférieur ou égal à 2×π×H / L.

Dans un autre mode de réalisation permettant d'obtenir des zones droites transversales du deuxième groupe de zones déformables, chaque zone droite transversale du deuxième groupe de zones est agencée de façon à permettre un allongement de chaque zone droite transversale du deuxième groupe de zones selon la première direction générale, cet allongement étant préférentiellement au plus égal à 20%, de préférence à 15%, et plus préférentiellement à 10% de l'allongement de chaque zone droite transversale du premier groupe de zones selon la première direction générale, en particulier et de préférence pour toute contrainte non nulle inférieure ou égale à (P0×(L/2π+H)×l)/2 exercée sur le premier tissu selon la première direction générale, et pour tout allongement du premier tissu selon la première direction générale inférieur ou égal à (2π × H) / L.

De préférence, chaque zone droite transversale du premier groupe de zones est agencée de façon à permettre un allongement de chaque premier élément filaire de chaine selon la première direction générale dans chaque zone droite transversale du premier groupe de zones, en particulier et de préférence pour toute contrainte non nulle inférieure ou égale à (P0×(L/2π+H)×l)/2 exercée sur le premier tissu selon la première direction générale, et pour tout allongement du premier tissu selon la première direction générale inférieur ou égal à (2π × H) / L.

L'allongement de chaque premier élément filaire de chaine est rendu possible par la dissolution au moins partielle du deuxième organe filaire de chaque premier élément filaire de chaine.

De manière préférée, chaque zone droite transversale (Z1) du premier groupe de zones est agencée de façon à permettre un écartement des éléments filaire de trame les uns par rapport aux autres selon la première direction générale dans chaque zone droite transversale du premier groupe de zones, en particulier et de préférence pour toute contrainte non nulle inférieure ou égale à (P0×(L/2π+H)×l)/2 exercée sur le premier tissu selon la première direction générale, et pour tout allongement du premier tissu selon la première direction générale inférieur ou égal à (2π × H) / L.

Dans un mode de réalisation préféré, chaque zone droite transversale (Z2) du deuxième groupe de zones droites est agencée de façon à empêcher une rupture de chaque premier élément filaire de chaine dans chaque zone droite transversale (Z2) du deuxième groupe de zones, en particulier et de préférence pour toute contrainte non nulle inférieure ou égale à (P0×(L/2π+H)×l)/2 exercée sur le premier tissu selon la première direction générale, et pour tout allongement du premier tissu selon la première direction générale inférieur ou égal à (2π × H) / L.

Dans un mode de réalisation permettant d'obtenir des zones droites transversales (Z2) du deuxième groupe de zones indéformables, chaque zone droite transversale (Z2) du deuxième groupe de zones est agencée de façon à empêcher un allongement de chaque premier élément filaire de chaine selon la première direction générale dans chaque zone droite transversale (Z2) du deuxième groupe de zones, en particulier et de préférence pour toute contrainte non nulle inférieure ou égale à (P0×(L/2π+H)×l)/2 exercée sur le premier tissu selon la première direction générale, et pour tout allongement du premier tissu selon la première direction générale inférieur ou égal à (2π × H) / L.

Dans un autre mode de réalisation permettant d'obtenir des zones droites transversales (Z2) du deuxième groupe de zones déformables, chaque zone droite transversale (Z2) du deuxième groupe de zones est agencée de façon à permettre un allongement de chaque premier élément filaire de chaîne selon la première direction générale dans chaque zone droite transversale (Z2) du deuxième groupe de zones, cet allongement étant préférentiellement au plus égal à 20%, de préférence à 15%, et plus préférentiellement à 10% de l'allongement de chaque premier élément filaire de chaine selon la première direction générale dans chaque zone droite transversale (Z2) du premier groupe de zones, en particulier et de préférence pour toute contrainte non nulle inférieure ou égale à (P0×(L/2π+H)×l)/2 exercée sur le premier tissu selon la première direction générale, et pour tout allongement du premier tissu selon la première direction générale inférieur ou égal à (2π × H) / L.

Optionnellement, dans le mode de réalisation utilisant des zones droites transversales (Z2) du deuxième groupe de zones indéformables, chaque zone droite transversale (Z2) du deuxième groupe de zones est agencée de façon à empêcher un écartement des premiers éléments filaires de trame les uns par rapport aux autres selon la première direction générale dans chaque zone droite transversale (Z2) du deuxième groupe de zones, en particulier et de préférence pour toute contrainte non nulle inférieure ou égale à (P0×(L/2π+H)×l)/2 exercée sur le premier tissu selon la première direction générale, et pour tout allongement du premier tissu selon la première direction générale inférieur ou égal à (2π × H) / L.

Optionnellement, dans le mode de réalisation utilisant des zones droites transversales (Z2) du deuxième groupe de zones déformables, chaque zone droite transversale (Z2) du deuxième groupe de zones est agencée de façon à permettre un écartement des premiers éléments filaires de trame les uns par rapport aux autres selon la première direction générale dans chaque zone droite transversale (Z2) du deuxième groupe de zones, en particulier et de préférence pour toute contrainte non nulle inférieure ou égale à (P0×(L/2π+H)×l)/2 exercée sur le premier tissu selon la première direction générale, et pour tout allongement du premier tissu selon la première direction générale inférieur ou égal à (2π × H) / L.

Dans les modes de réalisation préférés décrits ci-dessus, chaque zone droite transversale (Z1) du premier groupe de zones est une zone dite déformable. De telles zones sont déformables dans les conditions de conformation et participent à la conformabilité du premier tissu. Chaque zone droite transversale (Z2) du deuxième groupe de zones est une zone dite non rompable. Optionnellement, dans un mode de réalisation, chaque zone droite transversale (Z2) du deuxième groupe de zones est indéformable. Dans un autre mode de réalisation, chaque zone droite transversale (Z2) du deuxième groupe de zones est déformable mais dans une bien moindre mesure que chaque zone droite transversale (Z1) du premier groupe de zones. De telles zones sont non rompables dans les conditions de conformation et ne participent pas ou peu à la conformabilité du premier tissu. Ainsi, chaque zone droite transversale (Z1) dite déformable du premier groupe de zones se déforme suffisamment pour permettre la conformation de l'assemblage et compense le non allongement ou le faible allongement des zones droites transversales (Z2) non rompables du deuxième groupe de zones. L'allongement à force maximale de l'ensemble des zones droites transversales du premier groupe de zones sera d'autant plus grand que les zones droites transversales dites déformables du premier groupe de zones sont courtes et peu nombreuses par rapport aux zones droites transversales non rompables du deuxième groupe de zones. À l'échelle des éléments filaires de chaine, les portions de chaque premier élément filaire de chaine situées dans chaque zone droite transversale (Z1) dite déformable du premier groupe de zones se déforment suffisamment pour permettre la conformation de l'assemblage et compensent le non allongement ou le faible allongement des portions de chaque premier élément filaire de chaine situées dans les zones droites transversales (Z2) non rompables du deuxième groupe de zones.

Aussi, chaque zone dite déformable du premier groupe de zones est déformable sous une contrainte relativement faible ce qui permet, lors du procédé de fabrication du pneumatique, d'utiliser une contrainte de conformation adaptée ne risquant pas de détériorer l'ébauche.

Ainsi, dans un mode de réalisation préféré, toutes les zones droites transversales (Z1) du premier groupe de zones sont identiques et l'allongement à force maximale Art1 de chaque zone droite transversale (Z1) du premier groupe de zones selon la première direction générale vérifie Art1 > (2π × H) / SLd1 avec SLd1 étant la somme des longueurs au repos Ld1 de toutes les zones droites transversales (Z1) du premier groupe de zones. L'allongement à force maximale est mesuré conformément à la norme NF EN ISO 13934-1 de juillet 2013 sur des échantillons de zones droites transversales (Z1) du premier groupe de zones.

Ainsi, avantageusement, dans le mode de réalisation précédent, l'allongement à rupture Arc de chaque premier élément filaire de chaine vérifie Arc > (2π × H) / SLd1. L'allongement à rupture Arc est mesuré selon la norme ASTM D885/D885 MA de janvier 2010. L'allongement à rupture Arc de chaque élément filaire est l'allongement nécessaire pour obtenir la rupture des premier et deuxième organes filaires.

De préférence, pour tout allongement de chaque zone droite transversale (Z1) du premier groupe de zones selon la première direction générale inférieur ou égal à (2π × H) / SLd1, le premier tissu développe une force, exprimée en N, selon la première direction générale inférieure ou égale à (P0 × (L/2π + H) × l) / 2, SLd1 étant la somme des longueurs au repos de toutes les zones droites transversales (Z1) du premier groupe de zones exprimée en m.

L'allongement, la contrainte exercée et la force développée sont déterminés conformément à la norme NF EN ISO 13934-1 de juillet 2013.

Dans un mode de réalisation préféré, chaque élément filaire porteur comprend une première portion filaire d'ancrage de chaque élément filaire porteur dans le premier tissu prolongeant la portion filaire porteuse dans le premier tissu :
- chaque zone droite transversale (Z1) du premier groupe de zones étant dépourvue de toute première portion filaire d'ancrage,
- chaque zone droite transversale (Z2) du deuxième groupe de zones comprenant au moins une première portion filaire d'ancrage.

De préférence, chaque zone droite transversale (Z2) du deuxième groupe de zones est agencée de façon à empêcher une rupture de chaque première portion filaire d'ancrage, en particulier et de préférence pour toute contrainte non nulle inférieure ou égale à (P0×(L/2π+H)×l)/2 exercée sur le premier tissu selon la première direction générale, et pour tout allongement du premier tissu selon la première direction générale inférieur ou égal à (2π × H) / L.

Ainsi, chaque zone droite transversale (Z2) comprenant au moins une première portion filaire d'ancrage est non rompable et ce, même sous une contrainte relativement élevée ce qui permet, lors du procédé de fabrication du pneumatique, d'utiliser une contrainte de conformation adaptée ne risquant pas de détériorer l'ébauche.

Dans un mode de réalisation, chaque zone droite transversale (Z2) du deuxième groupe de zones est agencée de façon à empêcher un allongement de chaque première portion filaire d'ancrage selon la première direction générale, en particulier et de préférence pour toute contrainte non nulle inférieure ou égale à (P0×(L/2π+H)×l)/2 exercée sur le premier tissu selon la première direction générale, et pour tout allongement du premier tissu selon la première direction générale inférieur ou égal à (2π × H) / L.

Dans un autre mode de réalisation, chaque zone droite transversale (Z2) du deuxième groupe de zones est agencée de façon à permettre un allongement de chaque première portion filaire d'ancrage selon la première direction générale, en particulier et de préférence pour toute contrainte non nulle inférieure ou égale à (P0×(L/2π+H)×l)/2 exercée sur le premier tissu selon la première direction générale, et pour tout allongement du premier tissu selon la première direction générale inférieur ou égal à (2π × H) / L.

Avantageusement, P0=80000 Pa, de préférence P0=60000 Pa, plus préférentiellement P0=40000 Pa. Plus P0 est petit, plus il est possible d'utiliser des contraintes petites lors du procédé de fabrication du pneumatique et moins on risque de détériorer l'ébauche lors de ce procédé.

De façon préférée, chaque zone droite transversale (Z1) du premier groupe de zones alterne, selon la première direction générale, avec une zone droite transversale (Z2) du deuxième groupe de zones.

Ainsi, à l'échelle du premier tissu, on obtient une déformation homogène de l'ensemble du premier tissu, cette déformation étant d'autant plus homogène que la longueur au repos de chaque zone droite transversale selon la première direction générale est petite. Par longueur au repos d'une zone droite transversale selon la première direction générale, on entend la longueur de la zone selon la direction longitudinale en l'absence de toute contrainte extérieure exercée sur la zone (autre que la pression atmosphérique). Une zone droite transversale au repos selon la première direction générale n'est ni en extension ni en compression selon cette direction et présente donc un allongement nul selon cette direction.

L'assemblage selon l'invention peut être écru, c'est-à-dire dépourvu de toute composition adhésive destinée à favoriser l'adhésion entre les premiers éléments filaires du premier tissu et/ou les deuxièmes éléments filaires du deuxième tissu avec une composition d'élastomère.

L'assemblage selon l'invention est mis en contact avec de l'eau, une solution ou une suspension aqueuse, avant ou lors de la constitution d'un assemblage imprégné, d'un article de caoutchouc ou d'un pneumatique comprenant l'assemblage selon l'invention. En particulier, l'assemblage selon l'invention peut être adhérisé, c'est-à-dire revêtu au moins en partie d'au moins une composition adhésive aqueuse favorisant une adhésion entre les premiers éléments filaires du premier tissu et/ou les deuxièmes éléments filaires du deuxième tissu avec une composition d'élastomère. Dans un mode de réalisation à deux couches, chaque premier et deuxième élément filaire à encoller est revêtu d'une couche d'un primaire d'adhésion, elle-même revêtue d'une couche de composition adhésive. Dans un mode de réalisation à une couche, chaque premier et deuxième élément filaire à encoller est directement revêtu d'une couche de composition adhésive. Un exemple de primaire d'adhésion est une résine époxy et/ou un composé isocyanate, éventuellement bloqué. La composition adhésive utilisée pourra être une colle RFL classique (Résorcinol-formaldéhyde-latex) ou bien encore les colles décrites dans les demandes WO 2013/017421, WO 2013/017422, WO 2013/017423, WO2015007641 et WO2015007642.

### Assemblage imprégné

Un autre objet de l'invention est un assemblage imprégné, de préférence pour pneumatique, le premier tissu étant imprégné au moins en partie d'une première composition polymérique, et le deuxième tissu étant imprégné au moins en partie d'une deuxième composition polymérique.

Par « imprégné », on entend que chaque composition polymérique pénètre au moins en surface le tissu. On peut donc avoir une imprégnation unifaciale avec une couverture d'une face du tissu par la composition polymérique ou une imprégnation bifaciale avec une couverture des deux faces du tissu par la composition polymérique. Dans les deux cas, l'imprégnation permet de créer un ancrage mécanique grâce à la pénétration de la composition polymérique dans les interstices présents dans les tissus.

Dans un mode de réalisation, chaque composition polymérique comprend au moins un élastomère, de préférence un élastomère diénique. Par élastomère ou caoutchouc (les deux termes étant synonymes) du type diénique, on entend de manière générale un élastomère issu au moins en partie (i.e. un homopolymère ou un copolymère) de monomères diènes (monomères porteurs de deux doubles liaisons carbone-carbone, conjuguées ou non). Cette composition peut alors se trouver à l'état cru ou à l'état cuit.

De manière particulièrement préférentielle, l'élastomère diénique de la composition de caoutchouc est choisi dans le groupe constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Chaque composition polymérique peut contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

Par ailleurs, dans ce mode de réalisation, chaque composition polymérique comprend, en plus de l'élastomère, de préférence diénique, une charge renforçante, par exemple du noir de carbone, un système de réticulation, par exemple un système de vulcanisation et des additifs divers.

Dans un autre mode de réalisation, chaque composition polymérique comprend au moins un polymère thermoplastique. Un polymère thermoplastique est par définition thermofusible. Des exemples de tels polymères thermoplastiques sont les polyamides aliphatiques, par exemple le nylon, les polyesters, par exemple le PET ou le PEN, et les élastomères thermoplastiques.

Les élastomères thermoplastiques (en abrégé "TPE") sont des élastomères se présentant sous la forme de copolymères blocs à base de blocs thermoplastiques. De structure intermédiaire entre polymères thermoplastiques et élastomères, ils sont constitués de manière connue de séquences rigides thermoplastiques, notamment polystyrène reliées par des séquences souples élastomère, par exemple polybutadiène ou polyisoprène pour des TPE insaturés ou poly(éthylène/butylène) pour des TPE saturés. C'est la raison pour laquelle, de manière connue, les copolymères blocs TPE ci-dessus se caractérisent généralement par la présence de deux pics de transition vitreuse, le premier pic (température la plus basse, généralement négative) étant relatif à la séquence élastomère du copolymère TPE, le second pic (température la plus haute, positive, typiquement supérieure à 80°C pour des élastomères préférentiels du type TPS) étant relatif à la partie thermoplastique (par exemple blocs styrène) du copolymère TPE. Ces élastomères TPE sont souvent des élastomères triblocs avec deux segments rigides reliés par un segment souple. Les segments rigides et souples peuvent être disposés linéairement, en étoile ou branchés. Ces élastomères TPE peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/ styrène).

De préférence, l'élastomère thermoplastique est insaturé. Par élastomère TPE insaturé, on entend par définition et de manière bien connue un élastomère TPE qui est pourvu d'insaturations éthyléniques, c'est-à-dire qui comporte des doubles liaisons carbone-carbone (conjuguées ou non) ; réciproquement, un élastomère TPE dit saturé est bien entendu un élastomère TPE qui est dépourvu de telles doubles liaisons.

Les première et deuxième compositions polymériques peuvent être différentes ou identiques. Par exemple, la première composition polymérique peut comprendre un élastomère diénique et la deuxième composition polymérique peut comprendre un élastomère thermoplastique ou inversement.

### Article de caoutchouc

L'invention concerne également un article de caoutchouc comprenant un assemblage selon l'invention, ou un assemblage imprégné selon l'invention. Par article de caoutchouc, on entend tout type d'article de caoutchouc tel qu'un ballon, un objet non pneumatique, une bande transporteuse.

### Pneumatique

L'invention concerne également un pneumatique comprenant un assemblage selon l'invention, ou un assemblage imprégné selon l'invention.

L'assemblage selon l'invention, imprégné ou non, est particulièrement adapté pour être incorporé dans un pneumatique tel que décrit, par exemple, dans le document WO 2018/130782 ou encore de manière préférée tel que décrit dans le document WO 2019/092343.

L'invention concerne en particulier un pneumatique comprenant un sommet ayant deux extrémités axiales prolongées chacune, radialement vers l'intérieur, par un flanc puis par un bourrelet destiné à entrer en contact avec une jante, l'ensemble constitué par le sommet, les deux flancs et les deux bourrelets délimitant une cavité torique intérieure et au moins un bourrelet, le pneumatique comprenant un assemblage selon l'un des arrangements quelconque de l'invention, destiné à reprendre au moins en partie la charge nominale Z appliquée au pneumatique monté sur sa jante et gonflé à sa pression nominale P, le premier tissu étant fixé sur la partie radialement intérieure du sommet et le deuxième tissu délimitant au moins partiellement la partie radialement intérieure de la cavité torique, la structure porteuse s'étendant continûment dans la cavité torique intérieure, de telle sorte que, lorsque le pneumatique est soumis à une charge nominale Z, les éléments filaires porteurs, reliés à une portion de pneumatique en contact avec le sol, sont soumis à un flambage en compression et au moins une partie des éléments filaires porteurs, reliés à la portion de pneumatique non en contact avec le sol, sont en tension.

Dans un arrangement particulier, la cavité torique est totalement délimitée en sa partie radialement intérieure par au moins un deuxième tissu d'un arrangement quelconque de l'assemblage selon l'invention.

Dans un autre arrangement particulier, la cavité torique est partiellement délimitée en sa partie radialement intérieure par au moins un deuxième tissu d'un arrangement quelconque de l'assemblage selon l'invention.

Ainsi, dans un mode préféré de cet arrangement particulier, un pneumatique selon l'invention sera un pneumatique, en particulier pour véhicule de tourisme, ayant une largeur axiale S, destiné à être gonflé à une pression nominale P et à être soumis à une charge nominale Z, comprenant :
- un sommet ayant deux extrémités axiales prolongées chacune, radialement vers l'intérieur, par un flanc puis par un bourrelet destiné à entrer en contact avec une jante, l'ensemble constitué par le sommet, les deux flancs et les deux bourrelets délimitant une cavité torique intérieure,
- éventuellement une armature de carcasse, reliant les deux flancs entre eux en s'étendant dans une portion radialement intérieure du sommet et étant ancrée, dans chaque bourrelet, à un élément circonférentiel de renforcement,
- au moins un bourrelet étant prolongé axialement vers l'intérieur par une semelle flexible en porte à faux comprenant une extrémité libre,
- la semelle flexible comprenant une portion d'ancrage au bourrelet et une portion courante rigide, s'étendant axialement vers l'intérieur à partir de la portion d'ancrage jusqu'à l'extrémité libre,
- le pneumatique comprenant un assemblage selon l'invention, destiné à reprendre au moins en partie la charge nominale Z appliquée au pneumatique monté sur sa jante et gonflé à sa pression nominale P,
- le premier tissu étant fixé sur la partie radialement intérieure du sommet et le deuxième tissu étant fixé sur la semelle flexible, la structure porteuse s'étendant continûment dans la cavité torique intérieure, de telle sorte que, lorsque le pneumatique est soumis à une charge nominale Z, les éléments filaires porteurs, reliés à une portion de pneumatique en contact avec le sol, sont soumis à un flambage en compression et au moins une partie des éléments filaires porteurs, reliés à la portion de pneumatique non en contact avec le sol, sont en tension.

### Procédé de mise en oeuvre

L'invention concerne également un procédé de mise en oeuvre de l'assemblage selon l'invention comportant au moins :
a) une étape de mise en contact de l'assemblage selon l'invention avec une solution ou une suspension aqueuse ;
b) éventuellement, une étape d'imprégnation de manière à obtenir un assemblage imprégné selon l'invention, cette étape d'imprégnation pouvant être réalisée avant ou après l'étape a) de mise en contact avec une solution ou une suspension aqueuse ;
c) une étape d'incorporation de l'assemblage selon l'invention ayant subi l'étape a) et éventuellement l'étape b) à un article de caoutchouc ou un pneumatique.

Par solution ou suspension aqueuse, on entend une solution ou suspension comprenant de l'eau, préférentiellement comprenant majoritairement de l'eau. Dans un arrangement préféré, la solution aqueuse ne comprend que de l'eau. Dans un autre arrangement préféré, la solution ou suspension aqueuse est une composition adhésive aqueuse.

L'étape a) est avantageusement suivie d'une étape de séchage, en particulier lorsque la solution ou suspension aqueuse est une composition adhésive aqueuse. Ainsi, la mise en contact de l'assemblage selon l'invention avec une solution ou une suspension aqueuse à une température de séchage adaptée permet la dissolution rapide du deuxième organe filaire et donc une mise en forme grandement facilitée de l'article de caoutchouc ou du pneumatique dans lequel l'assemblage selon l'invention sera intégré.

### Méthodes de mesure

L'allongement à la force maximale est mesuré conformément à la norme NF EN ISO 13934-1 de juillet 2013. Cet allongement à la force maximale étant mesuré selon la première direction générale, il correspond à l'allongement du premier tissu à partir duquel au moins un premier élément filaire rompt. D'autres éléments filaires rompent sur la portion de l'allongement comprise entre l'allongement à la force maximale et l'allongement à rupture tels que définis dans la norme NF EN ISO 13934-1 de juillet 2013. Cette mesure pourra être effectuée sur un assemblage écru, un assemblage adhérisé ou bien extrait de pneumatique. De préférence, la mesure sera effectuée sur un assemblage écru ou adhérisé.

Dans la présente demande, les propriétés du premier tissu sont déterminées en soumettant le premier tissu à un essai en traction conformément à la norme NF EN ISO 13934-1 de juillet 2013. Les propriétés intrinsèques des éléments filaires sont déterminées en soumettant les éléments filaires à un essai en traction conformément à la norme ASTM D885/D885 MA de janvier 2010.

### Description des figures

L'invention est illustrée par les figures suivantes, non représentées à l'échelle et décrites ci-après :
[Fig 1] Coupe méridienne d'un pneumatique selon l'invention, avec deux semelles flexibles symétriques comprenant chacune une portion d'ancrage souple.
[Fig 2] Coupe circonférentielle d'un pneumatique selon l'invention en l'absence de charge appliquée et en l'absence de pression.
[Fig 3] Coupe circonférentielle d'un pneumatique selon l'invention, dans l'état écrasé.
[Fig 4] Vue du dessus l'assemblage selon l'invention avant son assemblage dans le pneumatique.
[Fig 5] Vu en coupe de l'assemblage selon l'invention selon le plan de coupe P-P' représenté sur la Fig.3 illustrant les éléments filaires porteurs dans un état replié.
[Fig 6] Différents premiers éléments filaires de chaîne utilisables dans l'assemblage selon l'invention.
[Fig 7] Mesure de la force en fonction de l'allongement.

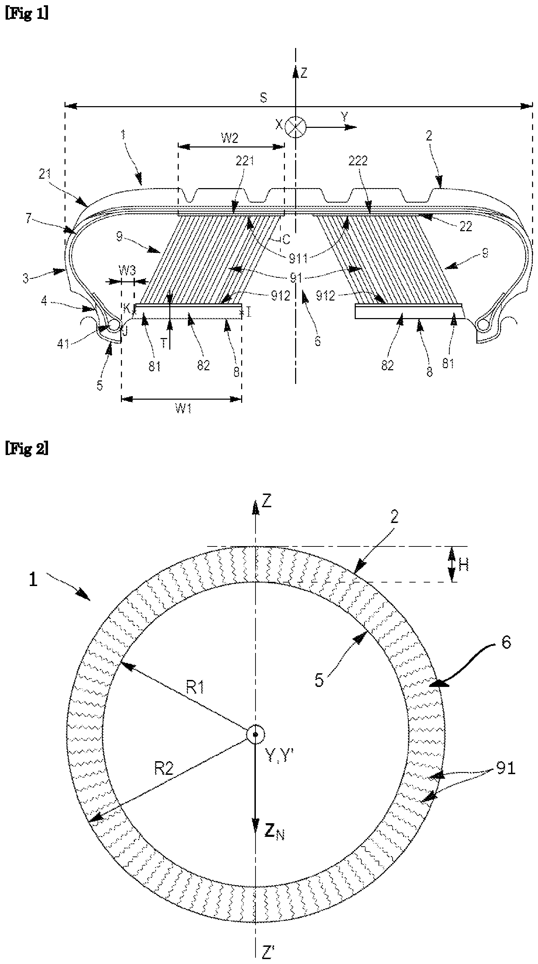

La **figure 1** représente la coupe méridienne d'un pneumatique 1 selon l'invention, avec deux semelles flexibles 8 symétriques comprenant chacune une portion d'ancrage 81 souple. Le pneumatique 1 comprend un sommet 2 ayant deux extrémités axiales 21 prolongées chacune, radialement vers l'intérieur, par un flanc 3 puis par un bourrelet 4 destiné à entrer en contact avec une jante 5, l'ensemble délimitant une cavité torique intérieure 6. Il comprend en outre une armature de carcasse 7, reliant les deux flancs 3 entre eux en s'étendant dans une portion radialement intérieure du sommet 2 et ancrée, dans chaque bourrelet 4, à un élément circonférentiel de renforcement 41. Chaque bourrelet 4 est prolongé axialement vers l'intérieur par une semelle flexible 8 en porte à faux comprenant une extrémité libre I. Les semelles flexibles 8 prolongeant chaque bourrelet 4 sont symétriques, par rapport à un plan équatorial XZ équidistant des extrémités axiales 21 du sommet 2, et structurellement identiques. Chaque semelle flexible 8 comprend une portion d'ancrage 81 au bourrelet et une portion courante 82 rigide, s'étendant axialement vers l'intérieur à partir de la portion d'ancrage 81 jusqu'à l'extrémité libre I. Dans le cas représenté, la portion d'ancrage 81, constituée par un prolongement d'armature de carcasse 7, a une rigidité K2 inférieure à la rigidité K1 de portion courante 82 rigide. La portion d'ancrage 81 de la semelle flexible 8 a une largeur axiale W3, mesurée entre le point J, le plus axialement extérieur de la semelle flexible 8 et en contact avec le bourrelet 4, et l'extrémité axialement extérieure K de la portion courante 82 de la semelle flexible 8. Chaque semelle flexible 8 a une largeur axiale W1, mesurée entre le point J, le plus axialement extérieur de la semelle flexible 8 et en contact avec le bourrelet 4, et l'extrémité libre axialement intérieure I de la semelle flexible 8. La portion courante 82 de la semelle flexible 8 a une épaisseur radiale moyenne T. Le pneumatique 1 comprend en outre une structure porteuse 9, destinée à reprendre au moins en partie la charge nominale Z appliquée au pneumatique monté sur sa jante 5 et gonflé à sa pression nominale P, comprenant des éléments filaires porteurs dont les portions filaires porteuses 91, deux à deux indépendantes, s'étendent continûment dans la cavité torique intérieure 6 entre un premier tissu 221, d'une largeur radiale W2, solidaire d'une interface 22 radialement intérieure du sommet et un deuxième tissu 912 relié à la semelle flexible 8, de telle sorte que, lorsque le pneumatique est soumis à une charge radiale nominale Z, les portions filaires porteuses 91, reliées à une portion de pneumatique en contact avec le sol, sont soumises à un flambage en compression et au moins une partie des portions filaires porteuses 91, reliées à la portion de pneumatique non en contact avec le sol, sont en tension. Les portions filaires porteuses 91 identiques forment, avec une direction radiale ZZ', un angle C au plus égal à 50°.

La **figure 2** présente une coupe circonférentielle d'un pneumatique 1 selon l'invention, monté sur une jante 5, en l'absence de charge appliquée et en l'absence de pression. La structure porteuse comprenant des éléments porteurs dont les portions filaires porteuses 91, deux à deux indépendantes, s'étendent continûment dans la cavité torique intérieure 6, à partir d'un premier tissu solidaire d'une interface radialement intérieure (non représentée) du sommet 2, ladite interface s'étendant continûment le long d'un cercle de rayon R2 égal à 313 mm, jusqu'à un deuxième tissu solidaire de l'interface radialement extérieure de la semelle flexible (non représentée), ladite interface s'étendant continûment le long d'un cercle de rayon R1 égal à 268 mm.

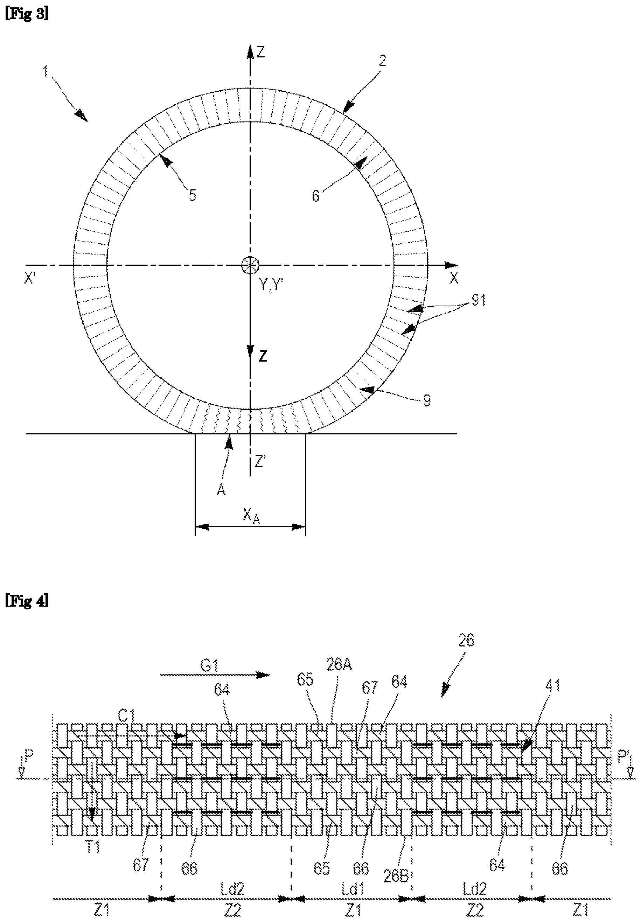

La **figure 3** présente une coupe circonférentielle d'un pneumatique 1 selon l'invention, monté sur une jante 5, dans son état gonflé écrasé, c'est-à-dire soumis à une pression nominale P et une charge radiale nominale Z. La structure porteuse 9 comprenant des éléments porteurs dont les portions filaires porteuses 91, deux à deux indépendantes, s'étendent continûment dans la cavité torique intérieure 6, à partir d'un premier tissu solidaire d'une interface radialement intérieure (non représentée) du sommet 2 jusqu'à un deuxième tissu solidaire de l'interface radialement extérieure de la semelle flexible (non représentée). Le pneumatique 1, soumis à une charge radiale nominale Z, est en contact avec un sol plan par une surface de contact A, ayant une longueur circonférentielle X_{A}. Les portions filaires porteuses 91, reliées à une portion de pneumatique en contact avec le sol, sont soumises à un flambage en compression et au moins une partie des portions filaires porteuses 91, reliées à la portion de pneumatique non en contact avec le sol, sont en tension.

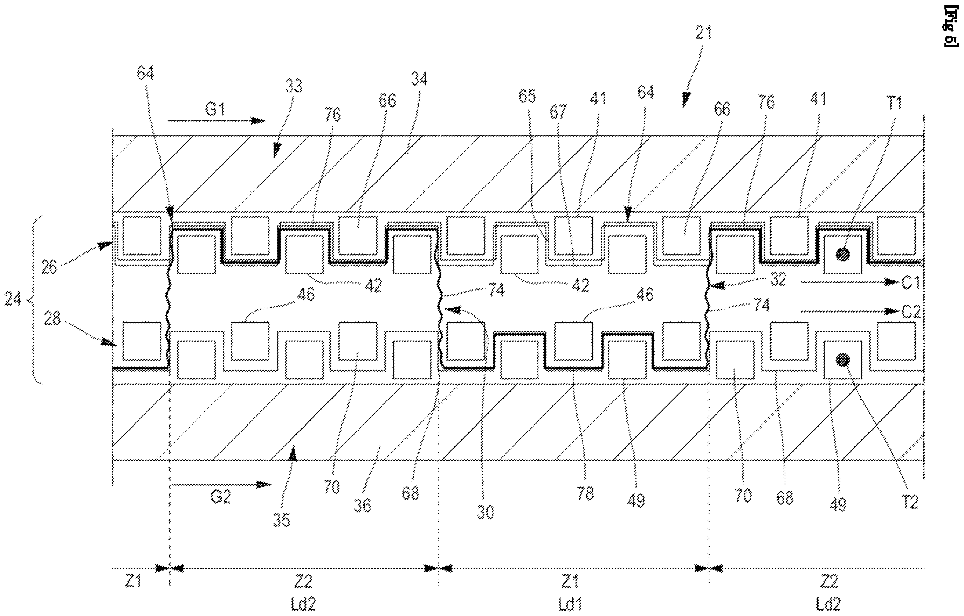

On représente sur les **figures 4** **et** **5** respectivement une vue de dessus d'un arrangement d'un assemblage 24 selon l'invention et une coupe d'un arrangement de l'assemblage selon un plan P-P' tel que représenté sur la **figure 4****.**

Le premier tissu 26 comprend deux bords longitudinaux 26A et 26B. Le premier tissu 26 s'étend selon une première direction générale G1 sensiblement parallèle à chaque bord longitudinal 26A, 26B. Le premier tissu 26 comprend des premiers éléments filaires 64, appelés premiers éléments filaires de chaine, et des premiers éléments filaires 66, appelés premiers éléments filaires de trame. Les premiers éléments filaires de chaine 64 du premier tissu 26 sont sensiblement parallèles entre eux et s'étendent selon une première direction dite de chaine C1, sensiblement parallèle à la première direction générale G1. Les premiers éléments filaires de trame 66 du premier tissu 26 sont sensiblement parallèles entre eux et s'étendent selon une première direction dite de trame T1 et s'entrecroisent avec les premiers éléments filaires de chaine 64. Les premiers éléments filaires de chaine 64 s'étendent continûment sur toute la longueur du premier tissu 26.

De façon analogue au premier tissu 26, le deuxième tissu 28 comprend deux bords longitudinaux 28A et 28B. Le deuxième tissu 28 s'étend selon une deuxième direction générale G2 sensiblement parallèle à chaque bord longitudinal 28A, 28B. En l'espèce, la deuxième direction générale G2 est sensiblement parallèle à la première direction générale G1. Le deuxième tissu 28 comprend des deuxièmes éléments filaires 68, appelés deuxièmes éléments filaires de chaine, et des deuxièmes éléments filaires 70, appelés deuxièmes éléments filaires de trame. Les deuxièmes éléments filaires de chaine 68 du deuxième tissu 28 sont sensiblement parallèles entre eux et s'étendent selon une deuxième direction dite de chaine C2, sensiblement parallèle à la deuxième direction générale G2. Les deuxièmes éléments filaires de trame 70 du deuxième tissu 28 sont sensiblement parallèles entre eux et s'étendent selon une deuxième direction dite de trame T2 et s'entrecroisent avec les deuxièmes éléments filaires de chaine 68. Les deuxièmes éléments filaires de chaine 68 s'étendent continûment sur toute la longueur du premier tissu 28.

Au sein de chaque premier et deuxième tissu 26, 28, les directions de chaine et de trame forment l'une avec l'autre un angle allant de 70° à 90°. En l'espèce, l'angle est sensiblement égal à 90°.

Au sein du pneumatique 1, chaque première et deuxième direction de chaine forme un angle inférieur ou égal à 10° avec la direction circonférentielle XX' du pneumatique 1. Dans le premier mode de réalisation, chaque première et deuxième direction de chaine forme un angle sensiblement nul avec la direction circonférentielle XX' du pneumatique 1.

Chaque élément filaire 64, 66, 68, 70 est un élément filaire textile.

Les éléments filaires 64 sont tous sensiblement identiques. Chaque premier élément filaire 64 de chaine comprend des premier et deuxième organes filaires 65, 67. Le deuxième organe filaire 67 est sensiblement rectiligne et le premier organe filaire 65 est enroulé sensiblement en hélice autour du deuxième organe filaire 67 en formant des boucles de façon sensiblement périodique (non représentées). Ici le premier organe filaire 65 est un brin multifilamentaire en PET présentant un titre égal à 110 tex et le deuxième organe filaire 67 est un brin monofilamentaire en PVA, un polymère hydrosoluble, présentant un titre égal à 15 tex et une ténacité égale à 36 cN/tex.

Les éléments filaires 66, 68, 70 sont tous sensiblement identiques, ici réalisés en polyéthylène téréphtalate (PET). En l'espèce, chaque élément filaire 66, 68, 70 est un élément filaire filé présentant une masse linéique égale à 170 tex et une ténacité égale à 66 cN/tex.

L'assemblage 24 comprend une structure porteuse 30 comprenant des éléments filaires porteurs 32. Chaque élément filaire porteur 32 s'étend alternativement du premier tissu 26 vers le deuxième tissu 28 et du deuxième tissu 28 vers le premier tissu 26 lorsqu'on se déplace le long de l'élément filaire porteur 32. Chaque élément filaire porteur 32 est un élément filaire porteur textile, ici réalisé en polyéthylène téréphtalate (PET). En l'espèce, chaque élément porteur 32 est un élément filaire filé présentant une masse linéique égale à 55 tex et une ténacité égale à 54 cN/tex.

Chaque élément filaire porteur 32 comprend une portion filaire porteuse 74 s'étendant entre les premier et deuxième tissus 26, 28, notamment entre les faces internes 42 et 46. Chaque élément filaire porteur 32 comprend des première et deuxième portions filaires d'ancrage 76, 78 de l'élément filaire porteur 32 respectivement dans le premier tissu 26 et le deuxième tissu 28. Chaque première et deuxième portion filaire d'ancrage 76, 78 prolonge la portion porteuse 74 respectivement dans chaque premier tissu 26 et deuxième tissu 28. Chaque première et deuxième portion filaire d'ancrage 76, 78 est entrelacée respectivement avec chaque premier tissu 26 et deuxième tissu 28. Chaque première et deuxième portion filaire d'ancrage 76, 78 est enroulée au moins en partie autour respectivement d'au moins un premier élément filaire 64, 66 du premier tissu 26 et d'au moins un deuxième élément filaire 68, 70 du deuxième tissu 28. Ainsi, chaque portion filaire d'ancrage 76, 78 relie deux portions filaires porteuses 74 entre elles et chaque portion filaire porteuse 74 relie deux portions filaires d'ancrage 76, 78 entre elles.

En l'espèce, chaque première portion filaire d'ancrage 76 est enroulée au moins en partie autour d'au moins un premier élément filaire de trame 66 du premier tissu 26 et ici, de préférence, autour d'au moins deux premiers éléments filaires de trame 66 adjacents selon la première direction générale G1. De façon analogue, chaque deuxième portion filaire d'ancrage 78 est enroulée au moins en partie autour d'au moins un deuxième élément filaire de trame 68 du deuxième tissu 28, de préférence autour d'au moins deux deuxièmes éléments filaires de trame 66 adjacents selon la deuxième direction générale G2.

Chaque première et deuxième portion filaire d'ancrage 76, 78 s'étend selon une direction sensiblement parallèle à respectivement la première et deuxième direction générale G1, G2.

Chaque première portion filaire d'ancrage 76 passe alternativement de la face 41 à la face 42 entre deux premiers éléments filaires de trame 66 adjacents autour desquels la première portion filaire d'ancrage 76 s'enroule. De façon analogue, chaque deuxième portion filaire d'ancrage 78 passe alternativement de la face 46 à la face 49 entre deux deuxièmes éléments filaires de trame 68 adjacents autour desquels la deuxième portion filaire d'ancrage 78 s'enroule.

Le premier tissu 26 comprend des zones droites transversales Z1 d'un premier groupe de zones, chaque zone droite transversale Z1 présentant une longueur au repos Ld1 selon la première direction générale G1 et s'étendant sur toute la largeur du premier tissu 26. Cette longueur Ld1 est la même pour toutes les zones droites transversales Z1 ici égale à 7,9 mm. Toutes les zones droites transversales Z1 du premier groupe de zones droites transversales sont identiques.

Le premier tissu 26 comprend également des zones droites transversales Z2 d'un deuxième groupe de zones, chaque zone droite transversale Z2 présentant une longueur au repos Ld2 selon la première direction générale G1 et s'étendant sur toute la largeur du premier tissu 26. Cette longueur Ld2 est la même pour toutes les zones droites transversales Z2 est ici égale à 5,8 mm. Toutes les zones droites transversales Z2 du deuxième groupe de zones droites transversales sont identiques.

Chaque zone droite transversale Z1 du premier groupe de zones alterne, selon la première direction générale ou selon la direction circonférentielle XX', avec une zone droite transversale Z2 du deuxième groupe de zones.

Lorsque le premier tissu est au repos comme cela est représenté sur la **figure 4****,** la somme des longueurs au repos Ld1 et Ld2 de toutes les zones droites transversales selon la première direction générale G1 est sensiblement égale à L. En l'espèce, pour une longueur L de l'assemblage 24 et donc une longueur L du premier tissu L=1692 mm présentant une largeur l=220 mm, la somme SLd1 des longueurs au repos Ld1 des zones droites transversales Z1 est égale à 975 mm et la somme des longueurs au repos Ld2 des zones droites transversales Z2 est égale à 717 mm. Le premier tissu comprend ainsi 123 zones droites transversales Z1 et Z2 entières ainsi qu'une zone droite transversale Z2 incomplète.

Dans l'arrangement particulier illustré **figure 5****,** correspondant à arrangement particulier d'un assemblage imprégné 21 selon l'invention, le premier tissu 26 est imprégné au moins en partie d'une première couche 33 d'une première composition polymérique 34. Le deuxième tissu 28 est imprégné au moins en partie d'une deuxième couche 35 d'une deuxième composition polymérique 36.

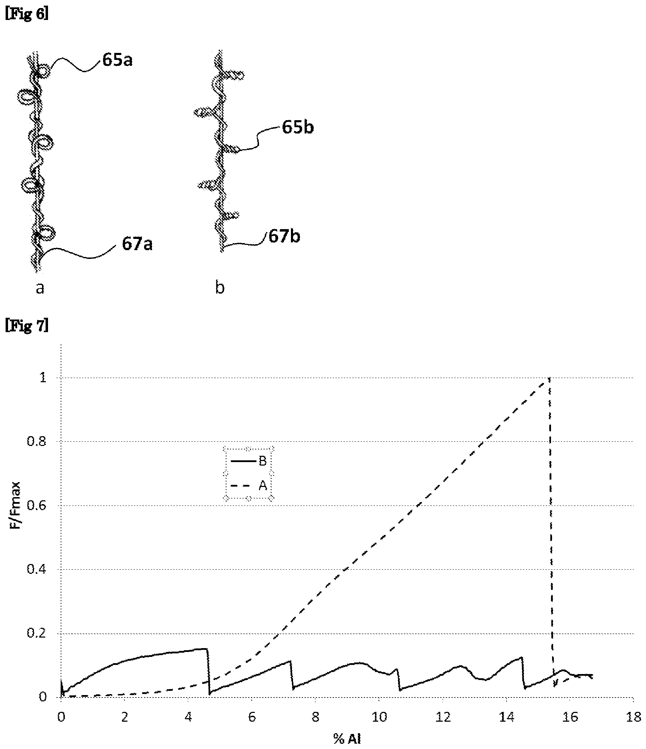

La **figure 6** présente différents arrangements possibles de premiers éléments filaires utilisables dans l'assemblage selon l'invention, connus de l'Homme du métier sous les désignations fil bouclé ou « loop yarn » (a) et fil bouclé vrillé ou « snarl yarn » (b). Chaque premier élément filaire de chaine comprend des premier (65a, 65b) et deuxième (67a, 67b) organes filaires. Le deuxième organe filaire (67a, 67b) est sensiblement rectiligne et le premier organe filaire (65a, 65b) est enroulé sensiblement en hélice autour du deuxième organe filaire et forme des boucles de façon sensiblement périodique.

### Exemple

On compare la force nécessaire pour la conformation d'un assemblage selon l'invention tel que présenté **figure 4** avec un assemblage de l'art antérieur tel que décrit dans le document WO 2018/130783.

L'allongement permettant d'obtenir une hauteur H de 45 mm telle que présentée **figure 2** est égal à 2×π×H/L, soit 2×π×45/1694=16,7%.

L'assemblage de l'art antérieur comprend un premier tissu comprenant des premiers éléments filaires de chaine comprenant des premier organe filaire constitué d'un brin multifilamentaire en PET présentant un titre égal à 110 tex et deuxième organe filaire constitué d'un assemblage de deux brins multifilamentaires de 11,5 tex en rayonne. Le premier organe filaire est enroulé en hélice autour du deuxième organe filaire, formant une guipe autour du deuxième organe filaire. Chaque premier organe filaire est donc, selon la terminologie de l'Homme du métier, un fil guipé.

L'assemblage selon l'invention comprend un premier tissu comprenant des premiers éléments filaires de chaine comprenant des premier organe filaire constitué d'un brin multifilamentaire en PET présentant un titre égal à 110 tex et deuxième organe filaire constitué de deux brins monofilamentaires de 15 tex en PVA.

Les assemblages sont identiques par ailleurs. Chacun de ces assemblages est mis en contact avec une composition adhésive aqueuse permettant d'améliorer l'adhésion aux compositions de caoutchouc. Cette composition adhésive aqueuse est une colle RFL (Résorcinol-formaldéhyde-latex) connue de l'Homme du métier. On attend environ 10 s puis on étire chacun des assemblages de manière à leur faire atteindre 16,7% d'allongement. La force nécessaire est mesurée.

On présente les résultats **figure 7****.** Sur cette figure, la valeur de force est normalisée par la force maximale nécessaire pour étirer l'assemblage de l'art antérieur entre 0 et 16,7% d'allongement. La courbe A correspond à l'assemblage selon l'art antérieur, et la courbe B à l'assemblage selon l'invention. En abscisse est représenté le pourcentage d'allongement (%Al) et en ordonnée est représentée la force nécessaire pour allonger l'assemblage, normalisée par la force maximale nécessaire pour étirer l'assemblage selon l'art antérieur sur un intervalle d'allongement compris entre 0 et 16,7%.

On observe qu'il faut appliquer une certaine force à l'assemblage selon l'art antérieur pour rompre les deuxièmes organes filaires. La force nécessaire pour allonger l'assemblage selon l'invention est bien plus faible, les deuxièmes organes filaires ayant été fortement fragilisés par la mise en présence de la composition adhésive aqueuse. La conformation de l'article de caoutchouc ou du pneumatique intégrant cet assemblage sera donc facilitée.

## Revendications

1. Assemblage pour un pneumatique comprenant :
a. un premier tissu, présentant un bord longitudinal s'étendant suivant une première direction générale (G1), comprenant des premiers éléments filaires, dits de chaîne, sensiblement parallèles entre eux et s'étendant selon une première direction (C1) dite de chaine, sensiblement parallèle à la première direction (G1), chaque premier élément filaire de chaîne comprenant des premier et deuxième organes filaires, le deuxième organe filaire étant à base d'un matériau fusible à une température comprise entre 20 et 220°C ;
b. un deuxième tissu, comprenant un bord longitudinal s'étendant suivant une deuxième direction (G2), la première direction générale (G1) et la deuxième direction (G2) étant sensiblement parallèles ;
c. une structure porteuse comprenant des éléments filaires porteurs reliant le premier tissu au deuxième tissu, chaque élément filaire porteur comprenant au moins une portion filaire porteuse s'étendant entre le premier et le deuxième tissu ;
tel que pour tout allongement du premier tissu selon la première direction générale (G1) inférieur ou égal à 2×π×H / L, le premier organe filaire est non rompu, avec 0 < H ≤ K×H0, H0 représentant en m la distance droite moyenne entre une face interne du premier tissu et une face interne du deuxième tissu lorsque chaque portion filaire porteuse est au repos, L représentant la longueur au repos du premier tissu selon la première direction générale (G1) et K=1,2.

2. Assemblage selon la revendication précédente dans lequel le deuxième organe filaire est à base d'un matériau au moins hydrosoluble, thermofusible, ou photodégradable.

3. Assemblage selon l'une quelconque des revendications précédentes dans lequel le deuxième organe filaire est à base d'un polymère hydrosoluble.

4. Assemblage selon la revendication précédente dans lequel le polymère hydrosoluble est choisi parmi l'alcool polyvinylique, l'acide polylactique, le polyéthylène glycol, le polyacrylamide et le polyvinylpyrrolidone, préférentiellement choisi parmi l'alcool polyvinylique et l'acide polylactique.

5. Assemblage selon l'une quelconque des revendications précédentes dans lequel le deuxième organe filaire présente un titre inférieur ou égal à 30 tex.

6. Assemblage selon l'une quelconque des revendications précédentes dans lequel le deuxième organe filaire est sensiblement rectiligne, le premier organe filaire étant enroulé en hélice autour du deuxième organe filaire.

7. Assemblage selon l'une quelconque des revendications précédentes dans lequel le deuxième organe filaire comprend au moins un brin multifilamentaire comprenant plusieurs monofilaments.

8. Assemblage selon l'une quelconque des revendications 1 à 6 dans lequel le deuxième organe filaire est constitué d'un unique monofilament.

9. Assemblage selon l'une quelconque des revendications 1 à 6 dans lequel le deuxième organe filaire est constitué de deux monofilaments.

10. Assemblage selon l'une quelconque des revendications précédentes dans lequel la longueur de chaque premier organe filaire au repos va de L à 1,30×L préférentiellement de L à 1,25×L, très préférentiellement de L à 1,20×L.

11. Assemblage selon l'une quelconque des revendications précédentes, dans lequel le premier tissu comprend :
a. un premier groupe de zones comprenant au moins une zone droite transversale (Z1), chaque zone droite transversale (Z1) du premier groupe de zones étant agencée de façon à permettre un allongement d'au moins une zone droite transversale (Z1) du premier groupe de zones selon la première direction générale (G1),
b. un deuxième groupe de zones comprenant au moins une zone droite transversale (Z2), chaque zone droite transversale (Z2) du deuxième groupe de zones étant agencée de façon à empêcher une rupture de ladite zone droite transversale (Z2).

12. Assemblage imprégné comprenant un assemblage selon l'une quelconque des revendications précédentes, le premier tissu étant imprégné au moins en partie d'une première composition polymérique, et le deuxième tissu étant imprégné au moins en partie d'une deuxième composition polymérique.

13. Article de caoutchouc comprenant un assemblage selon l'une quelconque des revendications 1 à 11, ou un assemblage imprégné selon la revendication 12.

14. Pneumatique comprenant un assemblage selon l'une quelconque des revendications 1 à 11, ou un assemblage imprégné selon la revendication 12.

15. Procédé de mise en oeuvre d'un assemblage selon l'une quelconque des revendications 1 à 11 comportant au moins :
a. une étape de mise en contact dudit assemblage avec une solution ou une suspension aqueuse ;
b. éventuellement, une étape d'imprégnation de manière à obtenir un assemblage imprégné, cette étape d'imprégnation pouvant être réalisée avant ou après l'étape a) de mise en contact avec une solution ou une suspension aqueuse ;
c. une étape d'incorporation de l'assemblage ayant subi l'étape a) et éventuellement l'étape b) à un article de caoutchouc ou un pneumatique.

## Patentansprüche

1. Anordnung für einen Reifen umfassend:
a. ein erstes Gewebe mit einer Längskante, die sich in einer ersten allgemeinen Richtung (G1) erstreckt, das erste Fadenelemente umfasst, Kettfadenelemente genannt, die im Wesentlichen parallel zueinander verlaufen und sich in einer ersten Richtung (C1), der Kettrichtung, erstrecken, die im Wesentlichen parallel zur ersten Richtung (G1) verläuft, wobei jedes erste Kettfadenelement ein erstes und ein zweites Fadenorgan umfasst, wobei das zweite Fadenorgan aus einem Material ist, das bei einer Temperatur zwischen 20 und 220 °C schmelzbar ist;
b. ein zweites Gewebe mit einer Längskante, die sich in einer zweiten Richtung (G2) erstreckt, wobei die erste allgemeine Richtung (G1) und die zweite Richtung (G2) im Wesentlichen parallel verlaufen;
c. eine tragende Struktur, die tragende Fadenelemente umfasst, die das erste Gewebe mit dem zweiten Gewebe verbinden, wobei jedes tragende Fadenelement wenigstens ein tragendes Fadenteilstück umfasst, das sich zwischen dem ersten und zweiten Gewebe erstreckt;
so dass für jede Dehnung des ersten Gewebes in der ersten allgemeinen Richtung (G1) kleiner als oder gleich 2xnxH / L das erste Fadenorgan nicht gerissen ist, mit 0 < H ≤ K×H0, wobei H0 den mittleren geraden Abstand in m zwischen einer Innenseite des ersten Gewebes und einer Innenseite des zweiten Gewebes, wenn jedes tragende Fadenteilstück im Ruhezustand ist, repräsentiert, wobei L die Länge im Ruhezustand des ersten Gewebes in der ersten allgemeinen Richtung (G1) repräsentiert und K=1,2.

2. Anordnung nach dem vorhergehenden Anspruch, wobei das zweite Fadenorgan aus einem wenigstens wasserlöslichen, heißschmelzenden oder lichtabbaubaren Material ist.

3. Anordnung nach einem der vorhergehenden Ansprüche, wobei das zweite Fadenorgan aus einem wasserlöslichen Polymer ist.

4. Anordnung nach dem vorhergehenden Anspruch, wobei das wasserlösliche Polymer aus Polyvinylalkohol, Polylactid, Polyethylenglykol, Polyacrylamid und Polyvinylpyrrolidon, vorzugsweise aus Polyvinylalkohol und Polylactid ausgewählt ist.

5. Anordnung nach einem der vorhergehenden Ansprüche, wobei das zweite Fadenorgan einen Titer kleiner als oder gleich 30 tex aufweist.

6. Anordnung nach einem der vorhergehenden Ansprüche, wobei das zweite Fadenorgan im Wesentlichen geradlinig ist, wobei das erste Fadenorgan spiralförmig um das zweite Fadenorgan gewickelt ist.

7. Anordnung nach einem der vorhergehenden Ansprüche, wobei das zweite Fadenorgan wenigstens einen Multifilamentstrang mit mehreren Monofilamenten aufweist.

8. Anordnung nach einem der Ansprüche 1 bis 6, wobei das zweite Fadenorgan von einem einzelnen Monofilament gebildet ist.

9. Anordnung nach einem der Ansprüche 1 bis 6, wobei das zweite Fadenorgan von zwei Monofilamenten gebildet ist.

10. Anordnung nach einem der vorhergehenden Ansprüche, wobei die Länge jedes ersten Fadenorgans im Ruhezustand von L bis 1,30xL, vorzugsweise von L bis 1,25xL, besonders bevorzugt von L bis 1,20xL beträgt.

11. Anordnung nach einem der vorhergehenden Ansprüche, wobei das erste Gewebe Folgendes umfasst:
a. eine erste Gruppe von Bereichen, die wenigstens einen geraden Querbereich (Z1) umfasst, wobei jeder gerade Querbereich (Z1) der ersten Gruppe von Bereichen so angeordnet ist, dass eine Dehnung wenigstens eines geraden Querbereichs (Z1) der ersten Gruppe von Bereichen in der ersten allgemeinen Richtung (G1) ermöglicht wird,
b. eine zweite Gruppe von Bereichen, die wenigstens einen geraden Querbereich (Z2) umfasst, wobei jeder gerade Querbereich (Z2) der zweiten Gruppe von Bereichen so angeordnet ist, dass ein Riss des geraden Querbereichs (Z2) verhindert wird.

12. Imprägnierte Anordnung umfassend eine Anordnung nach einem der vorhergehenden Ansprüche, wobei das erste Gewebe wenigstens teilweise mit einer ersten Polymerzusammensetzung imprägniert ist und das zweite Gewebe wenigstens teilweise mit einer zweiten Polymerzusammensetzung imprägniert ist.

13. Gummiartikel umfassend eine Anordnung nach einem der Ansprüche 1 bis 11 oder eine imprägnierte Anordnung nach Anspruch 12.

14. Reifen umfassend eine Anordnung nach einem der Ansprüche 1 bis 11 oder eine imprägnierte Anordnung nach Anspruch 12.

15. Verfahren zum Einsatz einer Anordnung nach einem der Ansprüche 1 bis 11, das wenigstens Folgendes aufweist:
a. einen Schritt des Inkontaktbringens der Anordnung mit einer wässrigen Lösung oder Suspension;
b. schließlich einen Schritt des Imprägnierens, um eine imprägnierte Anordnung zu erhalten, wobei dieser Schritt des Imprägnierens vor oder nach dem Schritt a) des Inkontaktbringens mit einer wässrigen Lösung oder Suspension durchgeführt werden kann;
c. einen Schritt des Einbringens der Anordnung, die den Schritt a) und schließlich den Schritt b) durchlaufen hat, in einen Gummiartikel oder einen Reifen.

## Claims

1. Assembly for a tyre, comprising:
a. a woven first fabric having a longitudinal edge extending in a first overall direction (G1), comprising first filamentary elements, referred to as warp elements, which are substantially parallel to one another and extend in a first direction (C1) referred to as the warp direction, substantially parallel to the first direction (G1), each first filamentary warp element comprising first and second filamentary members, the second filamentary member being based on a material that melts at a temperature of between 20 and 220°C;
b. a woven second fabric, comprising a longitudinal edge extending in a second direction (G2), the first overall direction (G1) and the second direction (G2) being substantially parallel;
c. a bearing structure comprising filamentary load-bearing elements connecting the woven first fabric to the woven second fabric, each filamentary load-bearing element comprising at least one filamentary load-bearing portion extending between the woven first and second fabrics;
such that, for any elongation of the woven first fabric in the first overall direction (G1) that is less than or equal to 2 × π × H/L, the first filamentary member is not broken when 0 < H ≤ K × H0, where H0 is the mean straight-line distance, in m, between an internal face of the woven first fabric and an internal face of the woven second fabric when each filamentary bearing portion is at rest, and L is the at-rest length of the woven first fabric in the first overall direction (G1) and K=1.2.

2. Assembly according to the preceding claim, wherein the second filamentary member is based on a material that is at least water-soluble, hot-meltable, or photodegradable.

3. Assembly according to any one of the preceding claims, wherein the second filamentary member is based on a water-soluble polymer.

4. Assembly according to the preceding claim, wherein the water-soluble polymer is selected from polyvinyl alcohol, polylactic acid, polyethylene glycol, polyacrylamide and polyvinylpyrrolidone, preferably selected from polyvinyl alcohol and polylactic acid.

5. Assembly according to any one of the preceding claims, wherein the second filamentary member has a count less than or equal to 30 tex.

6. Assembly according to any one of the preceding claims, wherein the second filamentary member is substantially rectilinear, the first filamentary member being wound in a helix around the second filamentary member.

7. Assembly according to any one of the preceding claims, wherein the second filamentary member comprises at least one multifilament strand comprising a plurality of monofilaments.

8. Assembly according to any one of Claims 1 to 6, wherein the second filamentary member consists of a single monofilament.

9. Assembly according to any one of Claims 1 to 6, wherein the second filamentary member consists of two monofilaments.

10. Assembly according to any one of the preceding claims, wherein the length of each first filamentary member at rest ranges from L to 1.30 × L, preferably from L to 1.25 × L, highly preferably from L to 1.20 × L.

11. Assembly according to any one of the preceding claims, wherein the woven first fabric comprises:
a. a first group of zones comprising at least one transverse straight zone (Z1), each transverse straight zone (Z1) of the first group of zones being arranged in such a way as to allow elongation of at least one transverse straight zone (Z1) of the first group of zones in the first overall direction (G1),
b. a second group of zones comprising at least one transverse straight zone (Z2), each transverse straight zone (Z2) of the second group of zones being arranged in such a way as to prevent breakage of said transverse straight zone (Z2).

12. Impregnated assembly comprising an assembly according to any one of the preceding claims, the woven first fabric being impregnated at least in part with a first polymer composition, and the woven second fabric being impregnated at least in part with a second polymer composition.

13. Rubber item comprising an assembly according to any one of Claims 1 to 11 or an impregnated assembly according to Claim 12.

14. Tyre comprising an assembly according to any one of Claims 1 to 11 or an impregnated assembly according to Claim 12.

15. Method for employing an assembly according to any one of Claims 1 to 11, comprising at least:
a. a step of bringing said assembly into contact with an aqueous solution or aqueous suspension;
b. possibly an impregnation step so as to obtain an impregnated assembly, it being possible for this impregnation step to be performed before or after step a) of bringing into contact with an aqueous solution or aqueous suspension;
c. a step of incorporating the assembly that has undergone step a) and possibly step b) into a rubber item or a tyre.
